# EUROPEAN PATENT SPECIFICATION

(11) **EP 0 854 461 B1**
(45) Date of publication and mention of the grant of the patent: **15.10.2008**
(21) Application number: 97309113.5
(22) Date of filing: 13.11.1997
(51) Int. Cl.: G07F 19/00, G06K 13/08

(54) **Self service terminal (SST) with maintenance feature**
Selbstbedienungsterminal (SBT) mit Wartungsfunktion
Terminal libre-service (TLS) avec une fonction d'entretien

(30) Priority: 18.12.1996 GB 9626196; 18.12.1996 GB 9626197
(43) Date of publication of application: 22.07.1998
(73) Proprietor: NCR INTERNATIONAL INC., Dayton, Ohio 45479 (US)
(72) Inventor: Gardner, John, Pitlessie, Fife, Scotland KY15 7SL (GB)
(74) Representative: MacLeod, Roderick William

(56) References cited:
- EP-A- 0 720 133
- US-A- 4 864 114
- US-A- 5 253 167
- PATENT ABSTRACTS OF JAPAN vol. 0145, no. 69 (P-1144), 18 December 1990 (1990-12-18) & JP 2 244296 A (HITACHI LTD), 28 September 1990 (1990-09-28)
- PATENT ABSTRACTS OF JAPAN vol. 0092, no. 81 (P-403), 8 November 1985 (1985-11-08) & JP 60 123980 A (MITSUBISHI JUKOGYO KK), 2 July 1985 (1985-07-02)
- PATENT ABSTRACTS OF JAPAN vol. 0101, no. 11 (P-451), 25 April 1986 (1986-04-25) & JP 60 241158 A (TOSHIBA KK), 30 November 1985 (1985-11-30)

## Description

The present invention relates to a self-service terminal (SST), and is particularly directed to an automated teller machine (ATM) and methods of maintaining a card reader, testing for a fraud tool, or cleaning parts of the ATM.

A typical ATM includes a card reader having a transport path and a card entry slot at one end of the transport path for receiving a user identification card from an ATM user to enable the ATM user to gain access to the ATM. When a customer inserts a user identification card into the card entry slot of the card reader, the card reader reads data contained on the card. The customer is then prompted on a display to enter a personal identification number (PIN) via a key pad. After the correct PIN is entered, menus are displayed on the display to enable the customer to carry out the desired transaction.

The card reader is a key component of the ATM. A service technician periodically performs maintenance operations on the card reader to maintain smooth and proper functioning of the card reader. A component failure in the card reader is often diagnosed by the service technician. Typically, the technician goes to the particular site of the failure and loads and executes diagnostic software, which alerts the technician of possible causes for the failure. The technician must then order parts. This method of diagnosing a card reader at an ATM is time-consuming and costly.

It is one object of the invention to provide a method diagnosing a card reader which overcomes such problems.

Another problem which may occur in an ATM is the use of a fraud tool device in a fraudulent scheme to steal a user identification card belonging to a legitimate ATM user is known. Typically, the person carrying out the fraudulent scheme inserts a fraud tool device into a card entry slot of a card reader of the ATM. The fraud tool device is then manipulated and positioned in the card entry slot so that a user identification card inserted by the next legitimate ATM user becomes jammed by the fraud tool device. Since the user identification card is jammed by the fraud tool device, the ATM user is unable to retrieve the card and eventually walks away from the ATM leaving the card behind. After the ATM user walks away from the ATM, the person carrying out the fraudulent scheme retrieves both the fraud tool device and the jammed user identification card. A number of known techniques have been applied in attempts to prevent a person from carrying out such a fraudulent scheme. A disadvantage in using the known techniques is that the presence of the fraud tool device is detected after a user identification card has been inserted into the ATM and jammed by the fraud tool device.

According to the present invention there is provided a self-service terminal (SST) comprising a card reader having a transport path and a card entry slot at one end of the transport path for receiving a user identification card from an SST user to enable the SST user to gain access to the SST; means to retain a maintenance card in a resting position adjoining the card reader; a transport mechanism for moving the maintenance card between the resting position and a testing positions; and a processor unit for controlling the transport mechanism to move the maintenance card between the two positions, wherein the resting position is within a card capture bin having an opening, the capture bin being divided into a lower compartment and an upper compartment, by an inner wall and a pivotally mounted diverter flap, the maintenance card being located in the upper compartment and access to the lower compartment being gained through movement of the diverter flap, which is controlled by the processor unit, between an open position and a closed position, such that the maintenance card can be moved between the resting position and the testing position through opening when the diverter flap is in the closed position and such that retained cards can be moved to the lower compartment when the diverter flap is in the open position.

The invention will now be described, by way of example, with reference to the accompanying drawings in which:
Fig. 1 is a perspective view of an automated teller machine (ATM) embodying the present invention;
Fig. 2 is a block diagram representation of the ATM of Fig. 1;
Fig. 3 is a view looking generally in the direction of arrow A of Fig. 1, with certain portions broken away and some parts shown only schematically; and
Fig. 4-12 are views similar to Fig. 3 and showing parts in different positions.

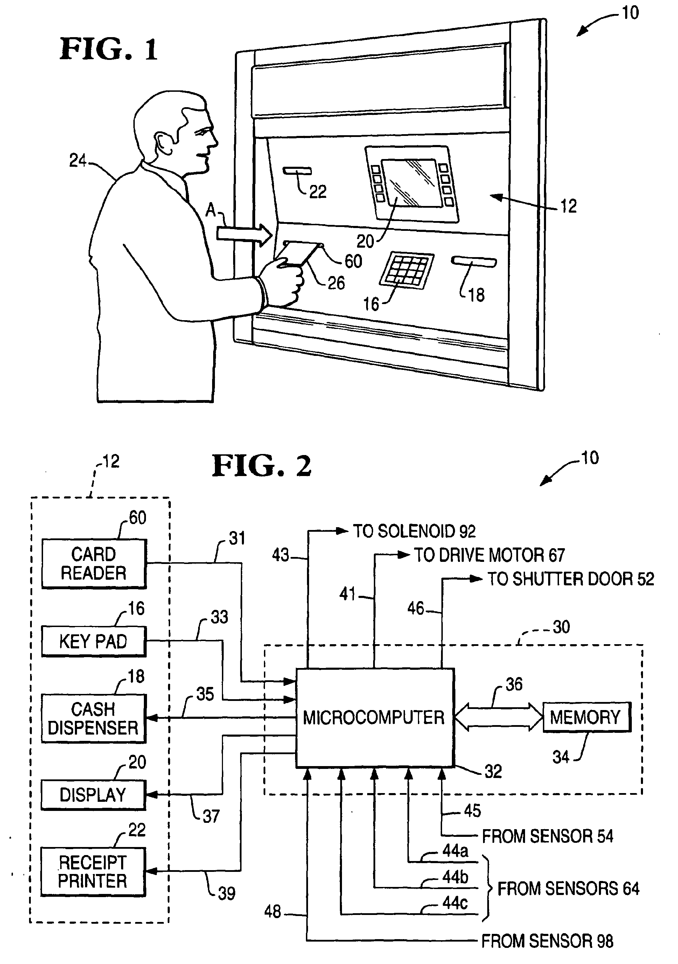

The ATM 10 comprises a user interface in the form of a front panel 12. The front panel 12 includes a card reader 60, a key pad 16, a cash dispenser 18, a CRT display 20, and a receipt printer 22. As particularly shown in Fig. 1, the card reader 60 has a card entry slot through which a customer 24 can insert a user identification card 26 at the commencement of a transaction to be conducted by the customer. The cash dispenser 18 has a cash slot through which cash currency notes stored inside the ATM 10 can be delivered to the customer 24 during the transaction. The receipt printer 22 has a receipt slot through which a receipt of the transaction is delivered to the customer 24 at termination of the transaction.

When the customer 24 inserts the user identification card 26 into the card entry slot of the card reader 60, the card reader reads data contained on the card. The customer 24 is then prompted on the CRT display 20 to enter a personal identification number (PIN) via the key pad 16. After the correct PIN is entered, menus are displayed on the display 20 to enable the customer 24 to carry out the desired transaction. After the transaction is completed, the receipt printer 22 prints a receipt of the transaction and delivers the receipt through the slot of the receipt printer 22 to the customer 24.

Referring particularly to Fig. 2, the ATM 10 further comprises a controller unit 30 which communicates with components of the front panel 12. The controller unit 30 includes a microcomputer 32 and a memory 34 connected via bus line 36 to the microcomputer 32. The microcomputer 32 receives input signals on lines 31, 33 from the card reader 60 and the key pad 16, respectively, and provides output signals on lines 35, 37, 39 to the cash dispenser 18, the display 20, and the receipt printer 22, respectively, to control the amount of cash dispensed by the cash dispensed by the cash dispenser 18, the information displayed on the display 20, and the information printed by the receipt printer 22. The memory 34 may be non-volatile RAM. Suitable microcomputers and memories are readily available in the marketplace. Their structure and operation are well known and, therefore, will not be described.

The microcomputer 32 communicates via a line with a central terminal located remotely from the ATM 10. Preferably, the line is a proprietary network owned or leased by the financial institution owning the ATM 10. The remote central terminal may be located at headquarters of the financial institution owning the ATM 10.

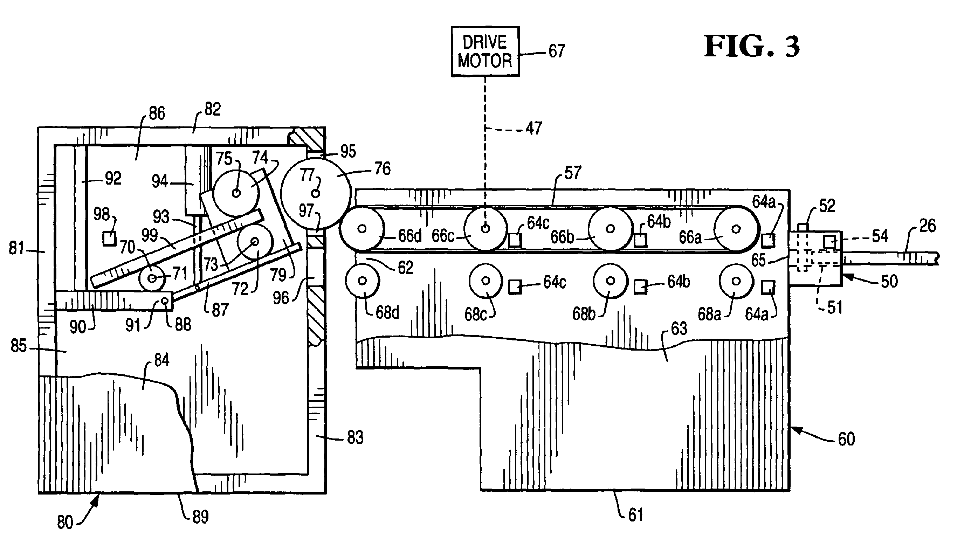

Referring to Fig. 3, the card reader 60 comprises an enclosure 61 including a side wall portion 63 which is shown broken away in Fig. 3 to show details of a transport path 62 defined within the enclosure. The card entry slot of the card reader 60 is designated as reference numeral 65" in Fig. 3. The card entry slot 65 is disposed at one end of the transport path 62. The card reader 60 further includes a number of sensors 64a, 64b, 64c located along the transport path 62 , a plurality of drive rollers 66a, 66b, 66c, 66d which are disposed on one side of the transport path, and a plurality of idler rollers 68a, 68b, 68c, 68d which are disposed on the other side of the transport path.

Preferably, each of the sensors 64a, 64b, 64c includes a light source located on one side of the transport path 62 and a light sensor facing the light source and located on the other side of the transport path. The sensors 64a, 64b, 64c are collectively referred to herein as "sensors 64". The drive rollers 66a, 66b, 66c, 66d are collectively referred to herein as "drive rollers 66". Similarly, the idler rollers 68a, 68b, 68c, 68d are collectively referred to herein as "idler rollers 68".

An endless belt 57 extends around the drive rollers 66, as shown in Fig. 3. The endless belt 57 defines the transport path 62. A drive motor 67 is operatively coupled (schematically shown as broken line 47 in Fig. 3) to the drive rollers 66 to rotate these rollers about their longitudinal central axes. The drive motor 67 is controlled by the microcomputer 32 via line 41 (shown only in Fig. 2). The microcomputer 32 monitors signals on line 44a, 44b, 44c (shown only in Fig. 2) from the sensors 64a, 64b, 64c, respectively, and controls operation of the drive motor 67 on line 41 in response thereto. The drive motor 67 drives the endless belt 57 to move a user identification card along the transport path 62 in a known manner.

A card capture bin 80 adjoins the card reader 60, as shown in Fig. 3. The capture bin 80 includes an enclosure 89 having a top wall portion 82 interconnecting opposite back and front wall portions 81, 83. A side wall portion 84 of the capture bin 80 is shown broken away to show details of the interior of the capture bin. A generally rectangular slot 96 is defined in the front wall portion 83. The slot 96 is aligned with the transport path 62 and has a size such that a user identification card is able to move from the transport path through the slot.

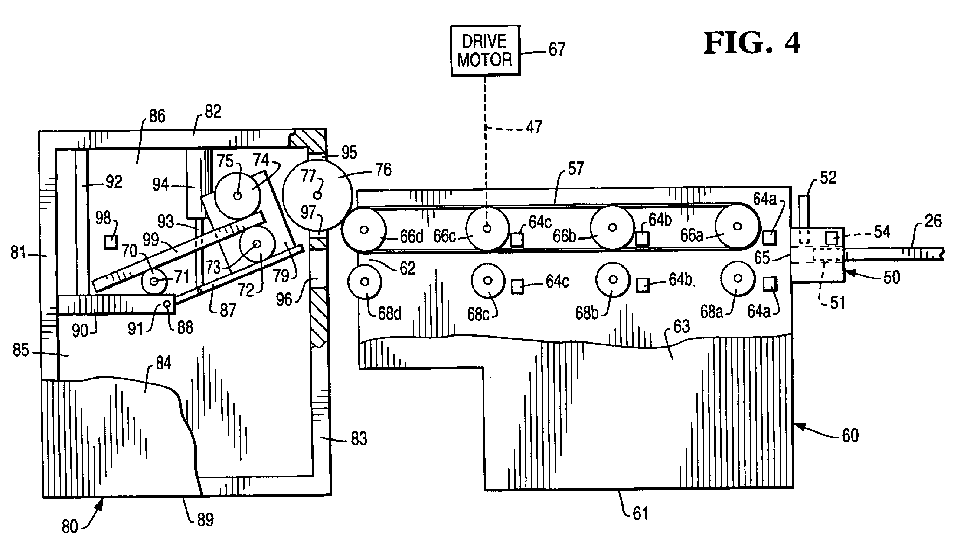

A shutter mechanism 50 is located in front of the card entry slot 65 of the card reader 60, as shown in Fig. 3. The shutter mechanism 50 has a shutter passage 51 which aligns with the card entry slot 65 such that the user identification card 26 inserted by the customer 24 is able to be moved through the shutter passage and the card entry slot into the transport path 62. The shutter mechanism 50 includes a shutter door 52 which is movable between a closed position which blocks the shutter passage 51 (as shown in Fig. 3) and an open position which unblocks the shutter passage (as shown in Fig. 4) to allow the user identification card 26 to move through the shutter passage into the transport path 62.

A sensor 54 is disposed along the shutter passage 51 and is located in a position which enables the user identification card 26 being inserted by the customer 24 to be detected. When the sensor 54 detects the presence of the leading edge of the user identification card 26 in the shutter passage 51 (as shown in Fig. 3), the sensor 54 provides an output signal on line 45 (shown only in Fig. 2) indicative thereof. The microcomputer 32 monitors the signal on line 45 and provides a control signal on line 46 to move the shutter door 52 from the closed position shown in Fig. 3 to the open position shown in Fig. 4 in response to the signal on line 45. The structure and operation of the shutter mechanism 50 including the shutter door 52 are known and, therefore, will not be described in detail.

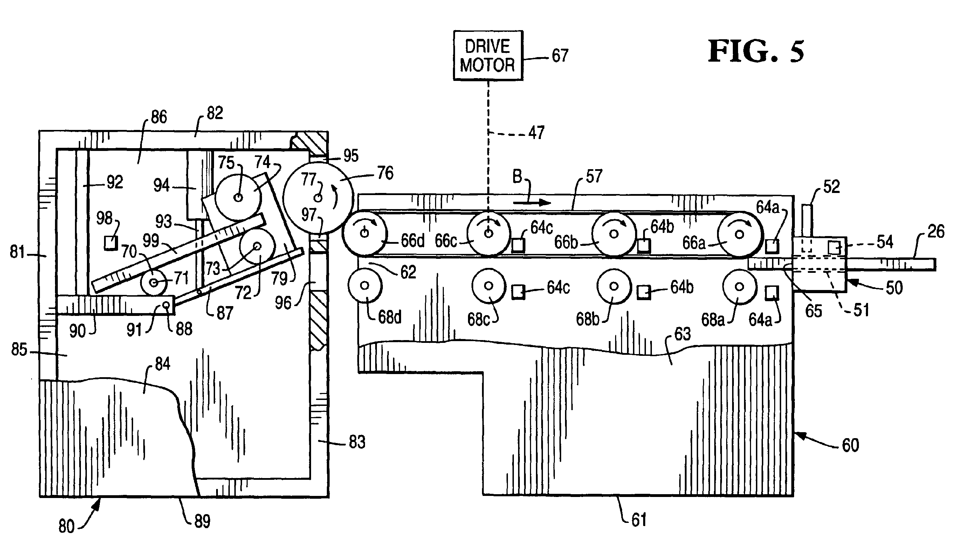

After the shutter door 52 has moved from the closed position shown in Fig. 3 to the open position shown in Fig. 4, the customer 24 is allowed to further insert the leading edge of the user identification card 26 from the position shown in Fig. 4 to the position shown in Fig. 5. In Fig. 5, the leading edge of the card 26 engages the outer circumferential surface of the endless belt 57.

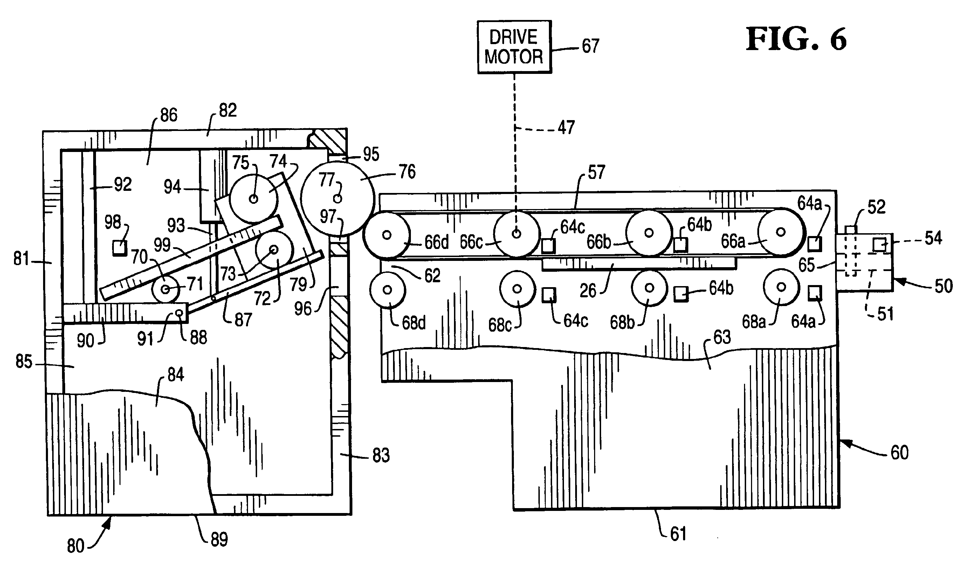

When the user identification card 26 is in the position shown in Fig. 5, the first sensor 64a detects the leading edge of the card and provides a signal on line 44a (shown only in Fig. 2) indicative thereof. When this occurs, the microcomputer 32 produces a signal on line 41 to actuate the drive motor 67 to rotate the drive rollers 66 about their longitudinal central axes in a direction indicated by the arrows shown in the drive rollers 66 in Fig. 5. The rotation of the drive rollers 66 moves the endless belt 57 in the direction of arrow "B" shown in Fig. 5. Since the leading edge of the card 26 engages the outer circumferential surface of the endless belt 57, the movement of the endless belt in the direction of arrow "B" in Fig. 5 results in movement of the card from the position shown in Fig. 5 to the position shown in Fig. 6.

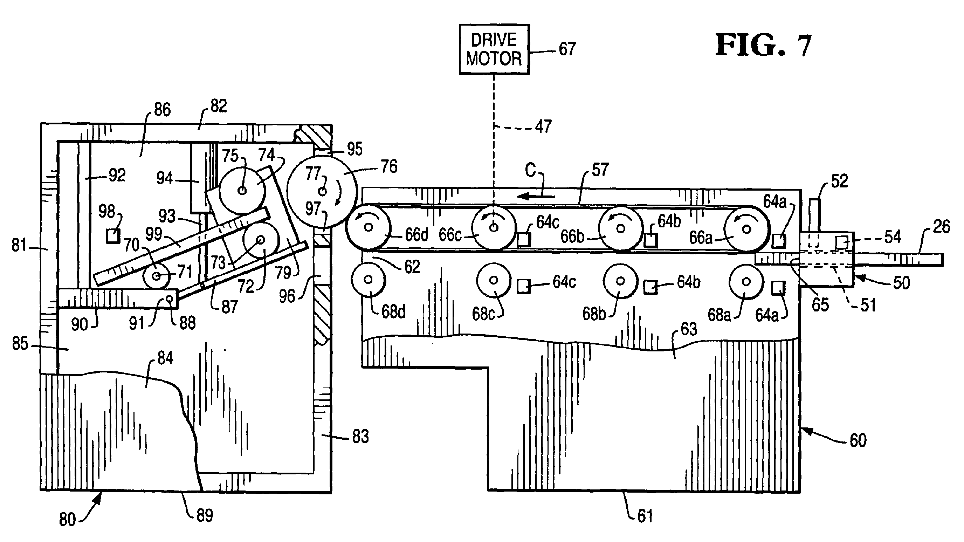

In Fig. 6, the leading edge of the card 26 is detected by the sensor 64c. When this occurs, the sensor 64c provides a signal on line 44c (Fig. 2) indicative thereof. In response to the signal on line 44c, the microcomputer 32 produces a signal on line 41 to turn the motor 67 off and a signal on line 52 to close the shutter door 52. While the card 26 is in the position shown in Fig. 6, the customer 24 is allowed to carry out the desired financial transaction. After completion of the financial transaction, the shutter door 52 is opened and the motor 67 is actuated to rotate in the opposite direction. This results in rotation of the drive rollers 66 in the opposite direction, as indicated by the arrows shown in the drive rollers 66 in Fig. 7. The rotation of the drive rollers 66 moves the endless belt 57 in the direction of arrow "C" shown in Fig. 7. This results in movement of the card 26 from the position shown in Fig. 6 to the position shown in Fig. 7. The card 26 is thereby returned to the customer 24.

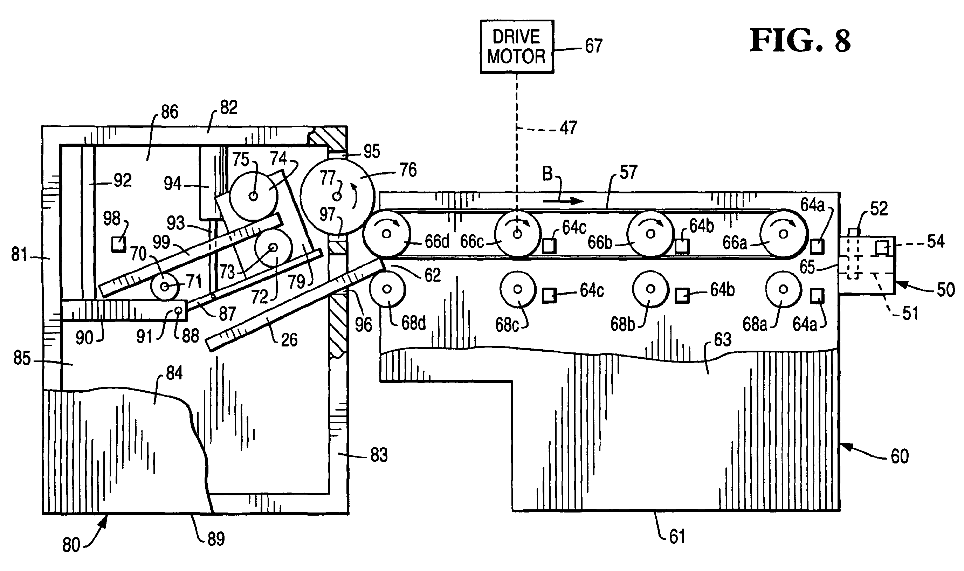

In the event that the customer 24 forgets to take the returned user identification card 26 shown in Fig. 7 and walks away from the ATM 10 after carrying out the financial transaction, the motor 67 is actuated to cause the card to move from the position shown in Fig. 7 to the position shown in Fig. 8. More specifically, the motor 67 is actuated to move the card 26 from the position shown in Fig. 7 to the position shown in Fig. 8 when the sensor 64a still detects the leading edge of the card 26 upon elapse of a predetermined amount of time since return of the card to the position shown in Fig. 7. Immediately after the card 26 moves from the position shown in Fig. 7 to the position shown in Fig. 8, the shutter door 52 closes as shown in Fig. 8.

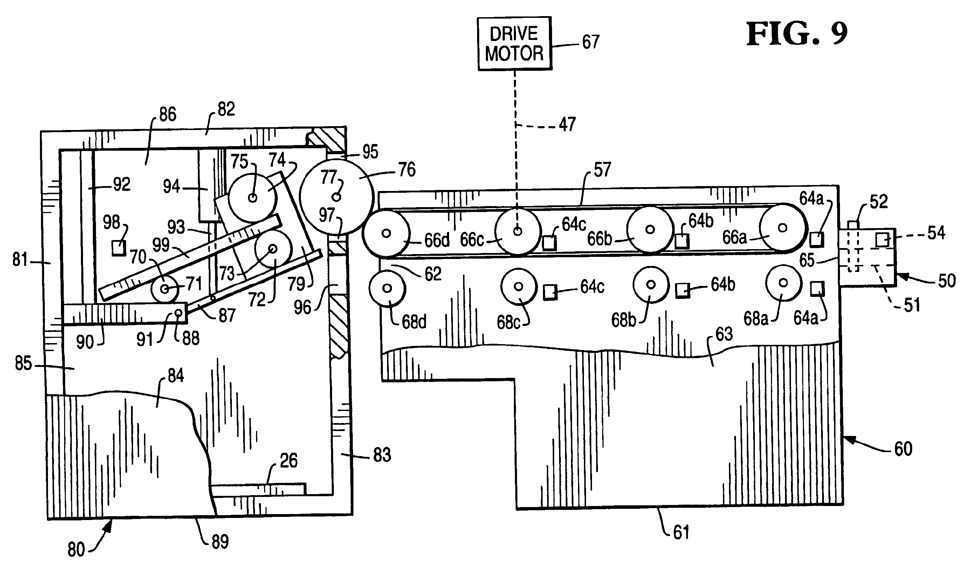

The card then drops from the position shown in Fig. 8 to the position shown in Fig. 9 inside the capture bin 80. The card 26 is thereby retained in the capture bin 80 to prevent a person who is not the card owner from taking the card. Shortly after the card 26 drops from the position shown in Fig. 8 to the position shown in Fig. 9, the first motor 67 turns off. This feature of retaining the card 26 after elapse of a predetermined amount of time is well known.

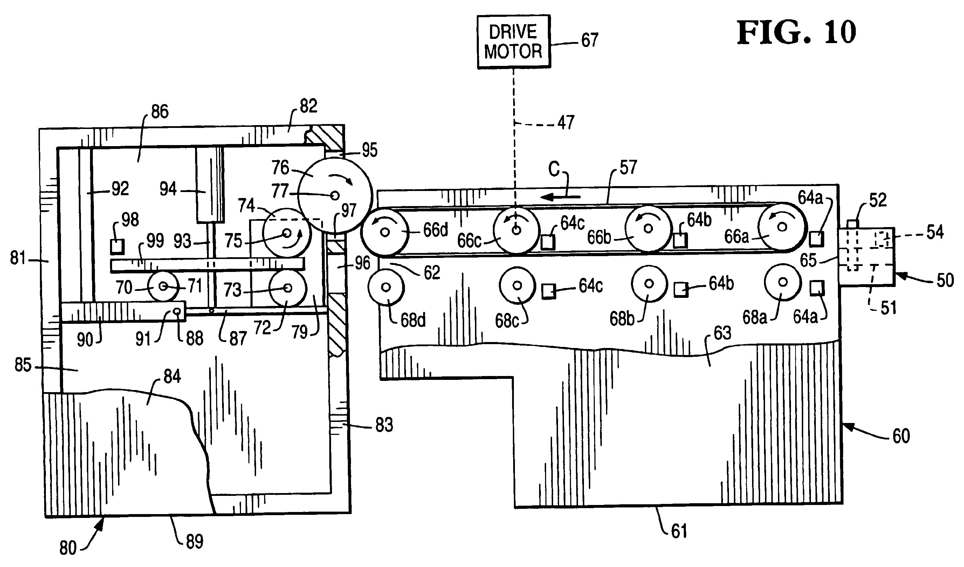

With specific reference to Fig. 7 in which the customer 24 has just completed a financial transaction, the capture bin 80 includes an inwardly extending wall portion 90 having one end thereof fixedly connected to the back wall portion 81. The inwardly extending wall portion 90 has an opposite free end 91 which extends inwardly to divide the space inside the capture bin into a lower compartment 85 and an upper compartment 86. A support piece 92 interconnects the top wall portion 82 and the inwardly extending wall portion 90 to support the inwardly extending wall portion. One end of a diverter flap 87 is pivotably connected via a pivot pin 88 to the free end 91 of the inwardly extending wall portion 90. The diverter flap 87 is pivotable between an open position as shown in Fig. 7 and a closed position as shown in Fig. 10.

An energizable solenoid 94 having a rod 93 connected to the armature (not shown) of the solenoid 94 is located in the upper compartment 86 and is fixedly mounted to the top wall portion 82. The solenoid 94 is mounted to the top wall portion 82 such that the rod 93 extends in a downward direction as viewed in Fig. 7. The rod 93 is connected to the diverter flap 87 in a manner as shown in Fig. 7 to move the diverter flap from the open position shown in Fig. 7 to the closed position shown in Fig. 10. The solenoid 94 is shown in Fig. 7 in a de-engergized condition, and is shown in Fig. 10 in an energized condition. The microcomputer 32 controls operation of the solenoid 94 in accordance with an application program stored in the memory unit 34 to control movement of the diverter flap 87 between the open position shown in Fig. 7 and the closed position shown in Fig. 10. The movement of the diverter flap 87 between the open position shown in Fig. 7 and the closed position shown in Fig. 10 will be described in detail later.

A first roller 70 is located in the upper compartment 86 and is rotatably mounted about its longitudinal central axis on a pivot pin 71 which is fixedly connected at one end to the side wall portion 84. A generally flat plate 79 is mounted on the diverter flap 87 and is movable together with the diverter flap. A second roller 72 is located in the upper compartment 86 and is rotatably mounted about its longitudinal central axis on a pivot pin 73 which is fixedly connected at one end to the flat plate 79. A third roller 74 is located in the upper compartment 86 and is rotatably mounted about its longitudinal central axis on a pivot pin 75 which is fixedly connected at one end to the flat plate 79.

A fourth roller 76 is located in a generally rectangular opening 95 defined in the front wall portion 83. The fourth roller 76 is rotatably mounted about its longitudinal central axis on a pivot pin 77 which is fixedly mounted between oppositely-facing interior edge surfaces 97 (only one of these edge surfaces 97 being shown in Fig. 7) defining the opening 95. The capture bin 80 is positioned relative to the card reader 60 such that the outer circumferential surface of the fourth roller 76 frictionally engages the outer circumferential surface of the endless belt 57.

A maintenence card 99, which may be a diagnostic card, is located in the upper compartment 86. Preferably, the diagnostic card 99 has a size which is identical to the size of a standard magnetic stripe card. The diagnostic card 99 contains magnetic data which, when read by the card reader 60, enables the microcomputer 32 to determine if components of the card reader are functioning smoothly and properly. The construction and operation of such diagnostic cards is well known and, therefore, will not be described.

In accordance with the present invention, the diagnostic card 99 resides in a position adjoining the card reader 60. As shown in Fig. 7, one end of the diagnostic card 99 is frictionally engaged between the second and third rollers 72, 74. The other end of the diagnostic card 99 rests on the first roller 70. The diagnostic card 99 is shown in Fig. 7 in a resting position. A sensor 98 detects the presence of the diagnostic card 99 in its resting position and provides a signal on line 48 (shown only in Fig. 2) indicative thereof. The diagnostic card 99 is movable from the position shown in Fig. 7 to a position shown in Fig. 10. The diagnostic card 99 is shown in Fig. 10 in a testing position. The movement of the diagnostic card 99 between the position shown in Fig. 7 and the position shown in Fig. 10 is under control of an application program stored in the memory 34. The movement of the diagnostic card 99 between the position shown in Fig. 7 and the position shown in Fig. 10 is described in detail hereinbelow.

Upon the microcomputer 32 receiving a command signal from the remote terminal 28 in response to an input from a service technician located at the remote terminal, the diagnostic card 99 is moved into the transport path 62 of the card reader 60 for the purpose of performing diagnostic tests on the card reader 60. When this occurs, the microcomputer 32 provides a signal on line 43 to energize the solenoid 94. When energized, the rod 93 connected to the armature of the solenoid 94 moves downward and thereby moves the diverter flap 87 from the open position shown in Fig. 7 to the closed position shown in Fig. 10. When the diverter flap 87 is in the position shown in Fig. 10, the outer circumferential surfaces of the third and fourth rollers 74, 76 frictionally engage each other.

The microcomputer 32 then produces a signal on line 42 to actuate the motor 67. The motor 67 is actuated such that the drive rollers 66 rotate in a direction indicated by the arrow shown in the drive roller 66d in Fig. 10. This rotation, in turn, causes the third and fourth rollers 74, 76 to rotate in the directions indicated by the arrows shown in the third and fourth rollers 74, 76 in Fig. 10.

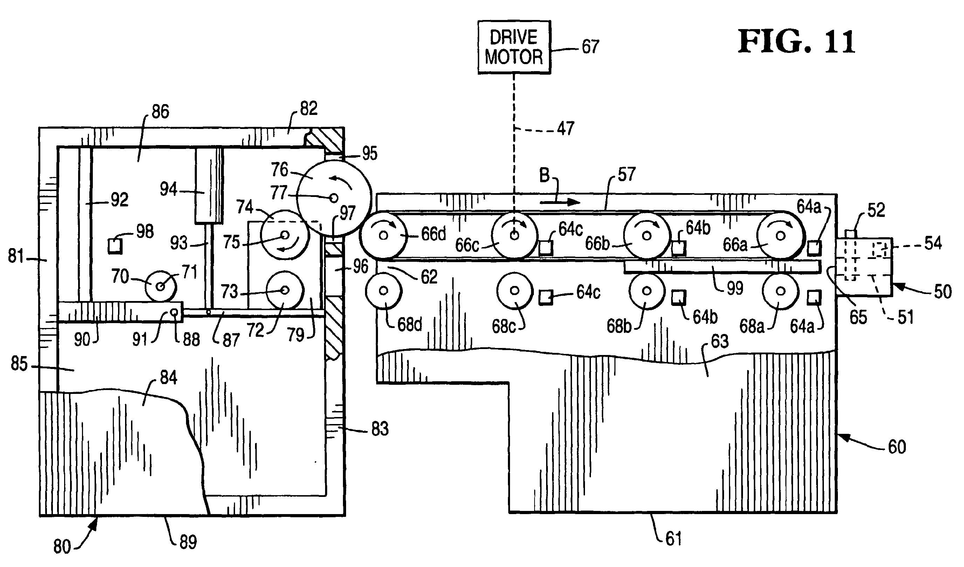

The rotation of the third and fourth rollers 74, 76 and the drive rollers 66, in the manner as just described, results in movement of the diagnostic card 99 from the position shown in Fig. 10 to the position shown in Fig. 11. In Fig. 11, the leading edge of the diagnostic card 99 is detected by the sensor 64a. When the sensor 64a detects the leading edge of the diagnostic card 99, the sensor 64a provides a signal on line 44a indicative thereof.

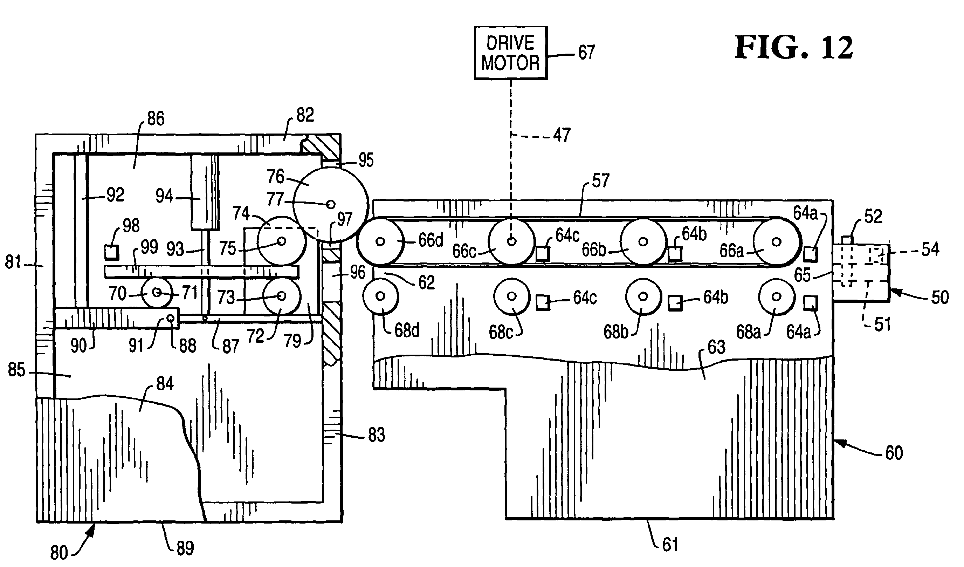

In response to the signal on line 44a, the microcomputer 32 provides a signal on line 41 to rotate the motor 67 in the opposite direction which, in turn, results in rotation of the drive rollers 66 in the direction of the arrows shown in the drive rollers 66 shown in Fig. 11. Also, the third and fourth rollers 74, 76 rotate in the directions indicated by the arrows shown in the third and fourth rollers 74, 76 in Fig. 11. This results in return movement of the diagnostic card 99 from the position shown in Fig. 11 to the position shown in Fig. 12. The return of the diagnostic card 99 back to the position shown in Fig. 12 is detected by the sensor 98 which provides a signal on line 48 indicative thereof. In response to the signal on line 48, the microcomputer 32 provides a signal on line 41 to turn off the motor 67 off.

When the diagnostic card 99 is in the position shown in Fig. 11, the card reader 60 reads the magnetic data contained on the diagnostic card. The microcomputer 32 then uses this magnetic data to perform diagnostic tests to determine if components of the card reader 60 are functioning smoothly and properly. If the microcomputer 32 determines that the card reader 60 passes all of the diagnostic tests, the microcomputer provides a signal indicative thereof. Upon this determination, the card reader 60 is ready to accept a user identification card from the next customer after the diagnostic card 99 returns to the resting position shown in Fig. 12.

However, if the microcomputer 32 determines that the card reader 60 has failed one or more of the diagnostic tests, the microcomputer 32 provides a signal indicating that the card reader 60 has malfunctioned and needs to be serviced. Upon this determination, the microcomputer 32 provides a signal on line 46 to disable the shutter door 52 as well as other signals required to disable the ATM 10 and prevent further use of the ATM. When disabled, the shutter door 52 is maintained in its closed position to prevent a user identification card from being inserted into the transport path 62.

When the microcomputer 32 determines that the card reader 60 is not operating properly and needs to be serviced, the microcomputer 32 may send diagnostic-type messages to the remote central terminal. These messages are displayed on a display at the remote central terminal to provide the service technician with information useful in servicing the card reader 60. For example, the diagnostic-type messages may contain information which suggests to the technician certain parts of the card reader 60 which may need to be replaced.

It is contemplated that the maintenance card 99 may be a cleaning type of card instead of a diagnostic type of card. Cards of the cleaning type are known and commercially available. If the card 99 is of the cleaning type, parts of the card reader 60 are cleaned upon each complete movement of the card 99 from its resting position to its testing position and then back to its resting position. The movement of the card 99 would be controlled by a service technician located at the remote terminal, in the same manner as already described hereinabove.

Although a single maintenance card has been described as residing in a position adjacent the card reader 60, it is contemplated that more than one card may reside in different positions adjacent the card reader 60. In this case, a structure is provided which allows the service technician located at the remote terminal 28 to selectively control movement of each card to perform different maintenance operations of the card reader 60.

A number of advantages result by providing an ATM and a method of operating the ATM in accordance with the present invention. One advantage is that card readers of a large number of ATMs may be serviced by a single technician located at a remote terminal. This saves time for the technician resulting in cost savings. Another advantage is that ATMs currently in the field can be easily retrofitted at relatively low cost with features of the present invention. Still another advantage is that the technician is able to identify spare components of the card reader which have the greatest chance of being needed for replacement, before actually going out to the particular ATM to service the card reader of that ATM when a service trip is required. Again, this saves time for the technician resulting in cost savings. Also, the quantity of spare components kept in inventory may be reduced.

In a variation, the maintenance card 99 is a fraud tool detect card (FTDC). As described above, the card 99 can be moved from the resting position to the testing position.

When the FTDC 99 is able to complete the entire movement from the position shown in Fig. 10 to the position shown in Fig. 11 and then back to the position shown in Fig. 12, the microcomputer 32 determines that the transport path 62 is clear and ready to accept a user identification card from the next customer. The ATM 10 is enabled and ready to process the next financial transaction.

However, if the FTDC 99 is unable to move completely from the position shown in Fig. 10 to the position shown in Fig. 11 and then return completely from the position shown in Fig. 11 to the position shown in Fig. 12, then the microcomputer 32 determines that the transport path 62 is not clear and that a fraud tool device may be present in the transport path. Upon this determination, the microcomputer 32 provides a signal on line 46 to disable the shutter door 52 as well as other signals required to disable the ATM 10 and prevent further use of the ATM. When disabled, the shutter door 52 is maintained in its closed position to prevent a user identification card from being inserted into the transport path 62. This prevents a user identification card from being inserted and jammed in the transport path 62 if a fraud tool is present in the transport path.

Although the foregoing describes movement of the FTDC 99 into the transport path 62 after completion of each financial transaction, it is possible that movement of the FTDC into the transport path could be effected before each financial transaction. For example, the FTDC 99 could be moved from its resting position to its testing position and then back to its resting position upon the sensor 64a detecting the presence of a user identification card. The shutter door 52 would not open until the microcomputer 32 has determined that the FTDC 99 has successfully moved from the resting position shown in Fig. 10 to the testing position shown in Fig. 11 and then back to the resting position shown in Fig. 12.

A number of advantages result by providing an ATM and a method of operating the ATM in accordance with the present invention. One advantage is that the presence of a fraud tool device is detected before a user identification card is inserted into the card reader 60. Jamming of a user identification card by the fraud tool device is avoided. Another advantage is that ATMs currently in the field can be easily retrofitted at relatively low cost with features of the present invention.

## Claims

1. A self-service terminal (SST) (10) comprising:
a card reader (60) having a transport path (62) and a card entry slot (65) at one end of the transport path for receiving a user identification card from an SST user to enable the SST user to gain access to the SST;
means (70, 73, 75) to retain a maintenance card (99) in a resting position adjoining the card reader;
a transport mechanism (57, 66, 70, 72, 74, 76, 94) for moving the maintenance card (99) between the resting position and a testing position; and
a processor unit (30) for controlling the transport mechanism to move the maintenance card (99) between the two positions,
wherein the resting position is within a card capture bin (80) having an opening (95), the capture bin being divided into a lower compartment (85) and an upper compartment (86), by an inner wall (90) and a pivotally mounted diverter flap (87), the maintenance card (26) being located in the upper compartment (86) and access to the lower compartment being gained through movement of the diverter flap (87), which is controlled by the processor unit (30), between an open position and a closed position, such that the maintenance card (99) can be moved between the resting position and the testing position through opening (95) when the diverter flap (87) is in the closed position and such that retained cards (26) can be moved to the lower compartment (85) when the diverter flap (87) is in the open position.

2. An SST according to claim 1, in which the testing position is within the card reader (60).

3. An SST according to claim 2, in which the transport mechanism (57, 66) is also arranged to move a user identification card between the card entry slot (65) and the testing position.

4. An SST according to any preceding claim, in which the card reader (60) includes a number of sensors (64) located along the transport path for detecting the presence of either a user identification card or the maintenance card (99) along the transport path (62).

5. An SST according to claim 4, in which each sensor (64) includes a light source located on one side of the transport path (62) and a light sensor facing the light source and located on the other side of the transport path.

6. An SST according to any preceding claim further comprising means of connecting to a remote terminal.

## Patentansprüche

1. Selbstbedienungsterminal (SST) (10) mit:
einem Kartenleser (60), der einen Transportweg (62) und einen Karteneingangsschlitz (65) an einem Ende des Transportwegs hat, um von einem SST-Nutzer eine Nutzeridentifikationskarte zu empfangen und **dadurch** dem SST-Nutzer Zugang zu dem SST zu ermöglichen;
einer Einrichtung (70, 73, 75), um eine Wartungskarte (99) in einer an den Kartenleser angrenzenden Ruheposition zu halten;
einem Transportmechanismus (57, 66, 70, 72 74, 76, 94), um die Wartungskarte (99) zwischen der Ruheposition und einer Testposition zu bewegen; und
einer Prozessoreinheit (30), um den Transportmechanismus zur Bewegung der Wartungskarte (99) zwischen den beiden Positionen zu steuern,
wobei sich die Ruheposition innerhalb eines mit einer Öffnung (95) versehenen Karteneinfangbehälters (80) befindet, der Einfangbehälter durch eine Innenwand (90) und eine schwenkbar montierte Ableitklappe (87) in eine untere Kammer (85) und eine obere Kammer (86) unterteilt ist, die Wartungskarte (26) sich in der oberen Kammer (86) befindet und Zugang zu der unteren Kammer durch Bewegung der von der Prozessoreinheit (30) gesteuerten Ableitklappe (87) zwischen einer offenen Position und einer geschlossenen Position erreicht wird, so dass die Wartungskarte (99) zwischen der Ruheposition und der Testposition durch die Öffnung (95) bewegt werden kann, wenn die Ableitklappe (87) sich in der geschlossenen Position befindet, und einbehaltene Karten (26) zu der unteren Kammer (85) bewegt werden können, wenn die Ableitklappe (87) sich in der offenen Position befindet.

2. SST nach Anspruch 1, in welchem sich die Testposition innerhalb des Kartenlesers (60) befindet.

3. SST nach Anspruch 2, in welchem der Transportmechanismus (57, 66) ferner angeordnet ist, um eine Nutzeridentifikationskarte zwischen dem Karteneingangsschlitz (65) und der Testposition zu bewegen.

4. SST nach einem der vorhergehenden Ansprüche, in welchem der Kartenleser (60) eine Anzahl von Sensoren (64) enthält, die längs des Transportwegs angeordnet sind, um das Vorhandensein entweder einer Nutzeridentifikationskarte oder der Wartungskarte (99) längs des Transportwegs (62) festzustellen.

5. SST nach Anspruch 4, in welchem jeder Sensor (64) eine auf einer Seite des Transportpfades (62) befindliche Lichtquelle enthält sowie einen Lichtsensor, der der Lichtquelle zugewandt ist und sich auf der anderen Seite des Transportpfads befindet.

6. SST nach einem der vorhergehenden Ansprüche, welches ferner eine Einrichtung zur Verbindung mit einem entfernten Terminal aufweist.

## Revendications

1. Terminal (10) de libre service TLS comprenant :
un lecteur (60) de carte ayant une voie (62) de transport et une fente (65) d'entrée de carte à une extrémité de la voie de transport pour recevoir une carte d'identification de l'utilisateur d'un utilisateur du TLS pour permettre à l'utilisateur du TLS d'avoir accès au TLS ;
des moyens (70, 73, 75) pour retenir une carte (99) de mise à jour dans une position de repos adjointe au lecteur de carte ;
un mécanisme (57, 66, 70, 72, 74, 76, 94) de transport pour déplacer la carte (99) de mise à jour entre la position de repos et une position de test, et
une unité (30) de processeur pour commander le mécanisme de transport afin qu'il déplace la carte (99) de mise à jour entre les deux positions,
dans lequel la position de repos est dans un casier (80) de capture de carte ayant une ouverture (95), le casier de capture étant subdivisé en un compartiment (85) inférieur et en un compartiment (86) supérieur par une paroi (90) intérieur et par un volet (87) de déviation monté pivotant, la carte (26) de mise à jour étant placée dans le compartiment (86) supérieur et l'accès au compartiment inférieur étant obtenu par déplacement du volet (87) de déviation qui est commandé par l'unité (30) de processeur entre une position ouverte et une position fermée de façon à ce que la carte (99) de mise à jour puisse être déplacée entre la position de repos et la position de test en passant dans l'ouverture (95) lorsque le volet (87) de déviation est dans la position fermée et de façon à ce que des cartes (26) retenues puissent être déplacées vers le compartiment (85) intérieur lorsque le volet (87) de déviation est dans la position ouverte.

2. TLS suivant la revendication 1, dans lequel la position de test est dans le lecteur (60) de carte.

3. TLS suivant la revendication 2, dans lequel le mécanisme (57, 66) de transport est conçu aussi pour déplacer une carte d'identification d'utilisateur entre la fente (65) d'entrée de carte et la position de test.

4. TLS suivant l'une quelconque des revendications précédentes, dans lequel le lecteur (60) de carte comprend un certain nombre de capteurs (64) disposés le long de la voie de transport pour détecter la présence d'une carte d'identification d'utilisateur ou de la carte (99) de mise à jour le long de la voie (62) de transport.

5. TLS suivant la revendication 4, dans lequel chaque capteur (64) comprend une source lumineuse disposé d'un côté de la voie (62) de transport et un capteur de lumière faisant face à la source lumineuse et disposé de l'autre côté de la voie de transport.

6. TLS suivant l'une quelconque des revendications précédentes, comprenant en outre des moyens de connexion à un terminal éloigné.
